# DEMANDE DE BREVET EUROPEEN

(11) **EP 2 009 837 A1**
(43) Date de publication de la demande: **31.12.2008**
(21) Numéro de dépôt: 07301149.6
(22) Date de dépôt: 26.06.2007
(51) Int. Cl.: H04L 9/08, H04N 7/167

(54) **Procédé de génération embarqué d'un identifiant et d'une clé associée dans un objet portable communiquant**

(71) Demandeur: GEMPLUS, 13420 Gémenos (FR)
(72) Inventeur: Girard, Pierre GEMPLUS, 13112, LA DESTROUSSE (FR); Merrien, Lionel, H4K1Y3 QC, Montreal (CA)

(57) **Abrégé**

L'invention concerne un procédé de génération d'une première (IMSI) et d'une deuxième (KI) données dans un objet portable communiquant (SIM). Les premières données (IMSI) sont différentes les unes des autres. Le procédé est précédé d'une étape préalable de régénération d'une série prédéterminée (IMSI BSi) des premières données (IMSI) associés à ces deuxièmes données (Ki), l'étape préalable consistant à :
i - générer une valeur secrète (s);
ii - générer une suite de caractères à l'aide d'une fonction non inversible (H) ayant en entrée la valeur secrète (s) ;
iii -vérifier si une partie prédéterminée des caractères de la suite correspond à une des premières données et :
- si oui, mémoriser la première donnée, la valeur secrète (s) ayant permis de générer la suite et également tout ou partie des caractères restants de la suite, cette dernière partie constituant la deuxième donnée (Ki) associée à la partie prédéterminée de caractères ;
- si non, reprendre le procédé au point i ;

iv -reprendre l'étape préalable au point i jusqu'à ce qu'à chacune des premières données soit associée une deuxième donnée (Ki) et une valeur secrète (s) ayant permis de l'obtenir,
le procédé de génération consistant à :
a - entrer dans l'objet portable communiquant (SIM) une des valeurs générées (s) durant l'étape préalable ;
b - générer dans l'objet portable communiquant (SIM) la première donnée (IMSI) et la deuxième donnée correspondante (Ki) en appliquant la fonction non inversible (H) à la valeur secrète (s).

## Description

Le domaine de l'invention est celui des télécommunications et concerne plus particulièrement la génération embarquée d'un identifiant et d'une clé associée dans un objet portable communiquant. Un tel objet portable communiquant est par exemple une carte SIM (« Subscriber Identity Module » en anglais) utilisée habituellement dans les téléphones portables de type GSM.

Dans la suite de cette description, on se placera dans le cadre d'un système GSM, sachant que l'invention n'est pas limitée à ce domaine.

Une carte SIM ou plus généralement une UICC (Universal Integrated Circuit Card en anglais) est une carte à puce contenant un microcontrôleur et de la mémoire. Elle est utilisée en téléphonie mobile pour stocker les informations spécifiques à l'abonné d'un réseau mobile, en particulier pour les réseaux de type GSM ou UMTS. Elle permet également de stocker des applications de l'abonné, de son opérateur ou dans certains cas de tierces parties.

De manière connue, une carte UICC comporte des clés de sécurisation des différents intervenants (encarteur, opérateur) et notamment un identifiant appelé IMSI (International Mobile Subscriber Identity), une clé d'authentification Ki, des algorithmes associés (A3, A8) ainsi que des codes secrets de 4 à 8 chiffres (CHV1 et CHV2).

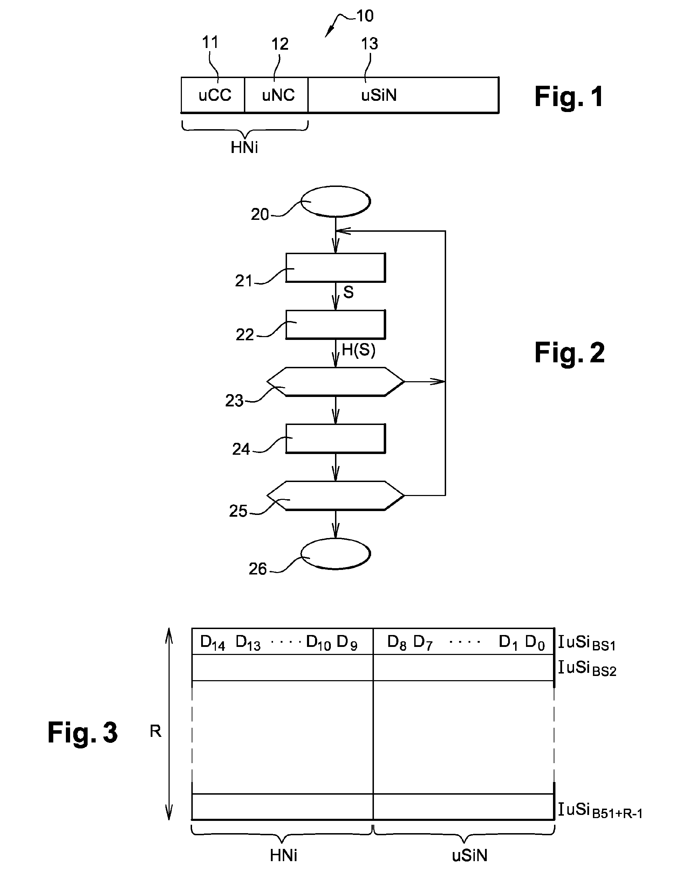

La figure 1 représente la structure d'un IMSI dans le système GSM.

L'IMSI, généralement référencé par 10, comporte un code mobile de pays MCC 11 (Mobile Country Code en anglais) sur trois chiffres qui identifie le pays d'origine de l'abonnement GSM, un code mobile de réseau MNC 12 (Mobile Network Code en anglais) sur trois chiffres qui, à l'intérieur d'un pays donné, identifie le réseau et par conséquent l'opérateur à qui appartient l'abonnement et un numéro d'identification de station mobile MSIN 13 (Mobile Station Identification Number en anglais) sur 9 chiffres. Le MCC 11 et le MNC 12 constituent l'identité du réseau hôte HNI (Home Network Identity en anglais).

La clé d'authentification Ki est spécifique à chaque abonné et est stockée dans la carte SIM et le centre d'authentification du réseau GSM (AUC, pour Authentication Center en anglais). La clé Ki est codée sur 128 bits.

Lorsqu'une carte SIM est livrée par un fabriquant de cartes à puce ou un encarteur, elle ne contient ni clé d'authentification Ki, ni IMSI. Lors de la personnalisation, l'opérateur attribue à la carte SIM la clé d'authentification Ki et l'IMSI qui sont enregistrés dans les répertoires MF/EFKey et MF/DFgsm/Efimsi respectivement (en standard GSM) de la carte.

Le couple (IMSI, Ki) est primordial car il sert au réseau à authentifier l'abonné.

Le problème posé aux opérateurs est que les couples IMSI/Ki correspondent à des abonnements qui ne sont pas utilisés dans la chaîne logistique aussi longtemps que des utilisateurs finaux n'auront pas souscrit des abonnements correspondants. Ces abonnements résident dans le HLR (Home Location Register en anglais) et constituent un stock qui représente un coût d'autant plus important qu'ils ne sont pas utilisés. La non utilisation d'IMSI/Ki est donc coûteuse pour un opérateur.

La présente invention a pour objectif de pallier cet inconvénient.

Plus précisément, un des objectifs de l'invention est de permettre à un opérateur de diminuer, voire de supprimer, le coût associé aux abonnements non utilisés.

Cet objectif, ainsi que d'autres qui apparaîtront par la suite, est atteint grâce à un procédé permettant à l'utilisateur final d'entrer lui-même un couple IMSI/Ki valide dans sa carte SIM après l'avoir achetée auprès d'un revendeur ou d'un opérateur. Cette personnalisation de carte SIM doit notamment pouvoir être mise en oeuvre en toute sécurité pour l'opérateur.

Ce procédé consiste plus précisément à générer une première (IMSI) et une deuxième (KI) données dans un objet portable communiquant, tel qu'une carte SIM, les premières données étant différentes les unes des autres, le procédé étant précédé d'une étape préalable de régénération d'une série prédéterminée des premières données associés à ces deuxièmes données, l'étape préalable consistant à :
i générer une valeur secrète ;
ii générer une suite de caractères à l'aide d'une fonction non inversible ayant en entrée la valeur secrète ;
iii vérifier si une partie prédéterminée des caractères de la suite correspond à une des premières données et :
   - si oui, mémoriser la première donnée, la valeur secrète ayant permis de générer la suite et également tout ou partie des caractères restants de la suite, cette dernière partie constituant la deuxième donnée associée à la partie prédéterminée de caractères ;
   - si non, reprendre le procédé au point i ;
iv reprendre l'étape préalable au point i jusqu'à ce qu'à chacune des premières données soit associée une deuxième donnée et une valeur secrète ayant permis de l'obtenir,
le procédé de génération consistant à :
a entrer dans l'objet portable communiquant une des valeurs générées durant l'étape préalable ;
b générer dans l'objet portable communiquant la première donnée et la deuxième donnée correspondante en appliquant la fonction non inversible à la valeur secrète.

L'invention s'applique dans tout système où il est souhaitable de générer une première et une deuxième données, la première donnée étant prédéfinie, tel qu'un identifiant IMSI, et la seconde donnée pouvant être un nombre aléatoire, tel qu'une clé de codage Ki associée à cet identifiant.

Préférentiellement, la valeur secrète générée au point i est une valeur aléatoire.

Dans un mode de mise en oeuvre préférentiel, lors de l'étape a, la valeur secrète générée durant l'étape préalable est chiffrée par une clé de transport, son déchiffrement étant réalisé dans l'objet portable communiquant.

La clé de transport correspond avantageusement à un numéro de série de l'objet portable communiquant.

Préférentiellement, la fonction non inversible est une fonction de hachage qui procède à un mélange des bits qui lui sont fournis en entrée.

Avantageusement, une clé mère est également appliquée à la fonction non inversible à l'étape ii et lors de la mise en oeuvre du procédé de génération embarquée (étapes a et b).

L'invention concerne également un objet portable communiquant comprenant des moyens pour mettre en oeuvre l'étape b selon la revendication 1.

D'autres caractéristiques et avantages de l'invention apparaîtront à la lecture de la description suivante d'un mode de mise en oeuvre préférentiel de l'invention, donné à titre illustratif et non limitatif, et des dessins annexés dans lesquels :
- la figure 1 représente la structure d'un IMSI dans le système GSM ;
- la figure 2 représente les étapes de génération de clés et de régénération d'identifiants associés à ces clés ;
- la figure 3 représente un exemple d'une série d'IMSIs alloués par un opérateur ;
- la figure 4 représente un tableau obtenu à l'issue de l'étape préalable de régénération d'une série prédéterminée des premières données associés aux deuxièmes données ;
- la figure 5 représente un dispositif permettant de mettre en oeuvre le procédé de la figure 2 ;
- la figure 6 représente la génération d'un code, dit code bootstrap, destiné à être communiqué à un utilisateur final ;
- la figure 7 représente un tableau obtenu à l'issue de la génération d'un code bootstrap ;
- la figure 8 représente un dispositif compris dans la carte SIM de l'utilisateur final, lui permettant de régénérer l'IMSI complet ainsi qu'une clé Kᵢ.

La figure 1 a été décrite précédemment en référence à l'état de la technique.

La figure 2 représente les étapes de génération de clés et de régénération d'identifiants associés à ces clés.

De manière générale, les identifiants IMSI et les clés Ki associées à ces identifiants seront parfois appelés par la suite des « premières » et des « deuxièmes » données, l'invention n'étant pas limitée à la génération d'IMSI et de clés Ki pour un système de radiotéléphonie mobile.

L'invention propose, dans une première étape, dite étape préalable, de régénérer des identifiants IMSIs associés à des clés Ki.

Dans cette étape préalable, le procédé comporte une étape de début 20 suivie d'une étape 21 de génération d'une valeur s, appelée valeur secrète, qui peut être une valeur aléatoire ou pseudo-aléatoire. A l'étape 22, la valeur secrète s est appliquée à une fonction, appelée H, fournissant en sortie une suite de caractères H(s). La fonction H est non inversible, c'est-à-dire qu'à partir d'une suite de caractères H(sᵢ), la probabilité de retrouver sᵢ dans un temps raisonnable est très faible, voisine de zéro.

La fonction H est préférentiellement une fonction de hachage qui a pour but de mélanger les bits qui lui sont fournis en entrée. Il peut s'agir d'une fonction SHA-1, SHA-256 ou SHA-512.

L'invention propose alors de comparer, lors d'une étape 23, une partie prédéterminée des caractères de la suite H(s) avec les IMSIs alloués par l'opérateur. Un exemple d'une série d'IMSIs alloués par un opérateur est représenté dans la figure 3.

Dans cette figure, un nombre R d'IMSIs a été alloué par un opérateur à la gestion des cartes selon l'invention. Chaque IMSI (notés IMSI_{BS1} à IMSI_{BS1+R-1}) comprend un code HNI sur 6 chiffres décimaux D₁₄ à D₉, avec D₁₄ le chiffre de poids le plus fort et D₉ le chiffre de poids le plus faible, ainsi qu'un code MSIN sur 9 chiffres D₈ à D₀, avec D₈ le chiffre de poids le plus fort et D₀ le chiffre de poids le plus faible.

Les codes HNI sont identiques entre eux, les codes MSIN étant tous différents et de préférence contigus (càd IMSI_{BSi+1} = IMSI_{BSi} + 1, les R IMSIs formant une suite continue). IMSI_{BSi} correspond à l'i ème abonnement réservé.

Plus le nombre R est petit, plus le nombre de chiffres de MSIN de poids le plus fort seront identiques entre eux.

De retour à la figure 2, l'étape 23 consiste par exemple à comparer les bits de poids fort de H(s) avec les chiffres de poids faible des R MSINs de la figure 3 (une fois ces derniers convertis en binaire).

A titre d'exemple, si les digits D₈ à D₄ sont identiques entre eux, on peut par exemple considérer que R est au maximum égal à 10.000 et que donc les quatre derniers chiffres des IMSIs de la table sont différents les uns des autres (de 0000 à 9.999). L'opérateur aura donc pré-alloué 10.000 IMSIs différents. La comparaison effectuée à l'étape 23 consiste à comparer le nombre H(s) avec ces 10.000 nombres différents. La manière la plus simple d'opérer est par exemple de ne retenir que les bits de poids le plus fort de H(s) et de les comparer avec les quatre digits D₃ à D₀. Une autre solution est de sélectionner dans H(s) une partie prédéterminée de bits, toujours de mêmes poids, et de les comparer aux nombres constituant les bits de poids faible des IMSIs.

Une alternative à la comparaison consiste à lire une table comportant 10.000 lignes et à regarder dans la ligne correspondant aux digits D₃ à D₀ si elle est ou non vide.

A la première occurrence de la comparaison 23, il y aura nécessairement un IMSI (sinon entier, pour le moins son suffixe) qui sera identifié (au début du procédé, toute la table est vide et l'entrée correspondante est donc vide). A ce moment là, on passe à l'étape 24 qui consiste à mémoriser l'IMSI reconnu et le secret s ayant permis de générer la suite de caractères. On mémorise également lors de cette étape 24 tout ou partie des caractères restants de la suite. Selon l'invention, ces caractères restants constitueront la clé Ki associée à la partie prédéterminée de caractères, et donc à une IMSI.

Si la partie prédéterminée de caractères ne correspond pas aux bits de poids faible de l'IMSI, on reprend le procédé à l'étape 21. Une autre valeur secrète s sera alors générée. La génération des secrets s peut être réalisée de manière aléatoire, pseudo-aléatoire ou alors consister à balayer de manière systématique toutes les valeurs de s possibles, de son minimum à son maximum.

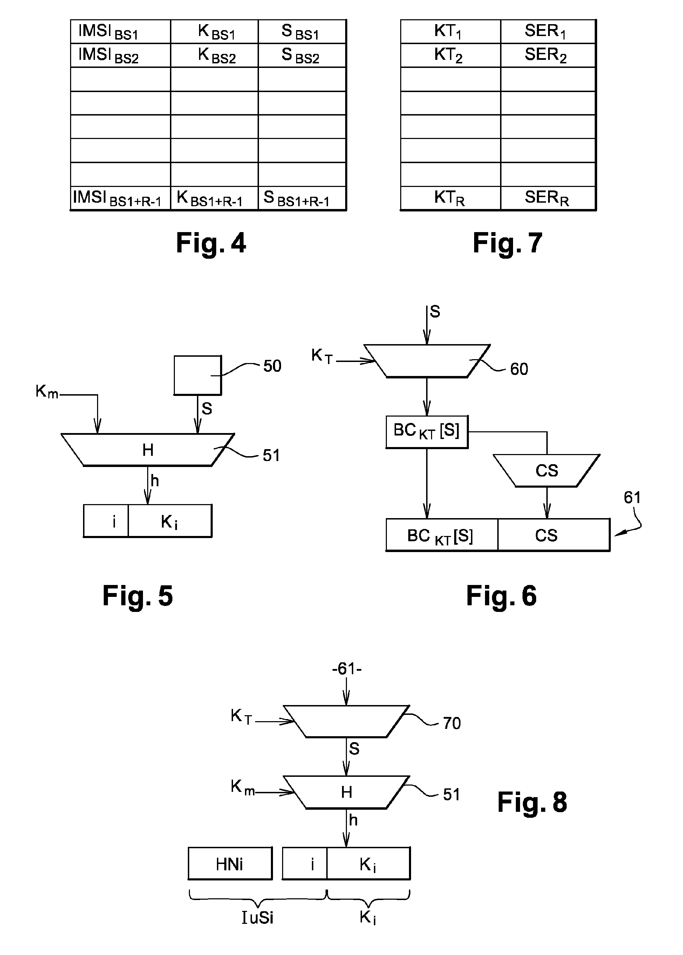

A l'étape 25, il est vérifié, dans le cadre de l'exemple numérique donné ci-dessus, si les 10.000 IMSIs ont été identifiés (c'est-à-dire si toute la table a été remplie). Si non, on reprend le procédé à l'étape 21. Si oui, cela signifie qu'à chaque valeur d'IMSI on aura associé une clé Ki et une valeur secrète s. On aura alors obtenu un tableau tel que celui représenté à la figure 4.

La figure 4 représente le tableau obtenu à l'issu de l'étape préalable de régénération d'une série prédéterminée d'IMSIs associés à des clés Ki. Chaque IMSI_{BSi} est associé à une clé K_{BSi} et à une valeur secrète s_{BSi}. Ce tableau représente donc les abonnements mis à disposition par l'opérateur souhaitant mettre en oeuvre la présente invention.

La figure 5 représente un dispositif permettant de mettre en oeuvre le procédé décrit jusqu'ici.

Le dispositif de la figure 5 comporte un générateur de nombre aléatoires ou pseudo-aléatoires 50 générant les nombres secrets s. Ceux-ci sont appliqués à un dispositif de hachage 51 recevant également, à titre optionnel, et si les nombres s sont courts (en terme de bits), une clé mère secrète Km qui est une constante pour un lot de cartes SIMs donné. La clé mère Kₘ peut être longue. Le dispositif de hachage 51 fournit en sortie une grandeur h dont les bits de poids le plus fort constituent la partie terminale des IMSIs à régénérer (les suffixes) et dont les bits de poids le plus faible constituent la clé Ki associée à l'IMSI régénérée.

A l'issue du procédé décrit jusqu'ici, l'opérateur dispose donc d'une table conforme à celle de la figure 4. Les IMSIs ont une longueur de quinze digits décimaux, les clés associées mesurent 128 bits et les valeurs secrètes s ont une longueur variable en fonction de la sécurité associée : entre 63 et 77 bits comme il sera vu par la suite.

Afin d'assurer de la sécurité au procédé qui sera décrit par la suite, chaque secret s est chiffré par une clé de transport K_{T} qui est propre à chaque carte (c'est-à-dire que deux cartes différentes auront des clés de transport différentes). Les clés de transport sont notées K_{Ti} dans la figure 7 (cette figure sera décrite par la suite) et le chiffrement est préférentiellement réalisé par bloc (Block Cipher en anglais) BC. Le chiffré d'un secret s_{BSi} par une clé de transport K_{Ti} est noté BC_{KTi}[s_{BSi}]. Comme il sera vu par la suite, chaque clé K_{Ti} correspond, au niveau d'un futur abonné, à un numéro de série SERᵢ inscrit en dur sur la carte SIM (ou sur son emballage) de ce futur abonné.

Le chiffrement des secrets s peut être obtenu par un dispositif conforme à la figure 6.

La figure 6 représente un mode de réalisation d'un dispositif permettant de générer un code BC_{KTi}[s_{BSi}], dit code bootstrap, à indiquer à un acheteur d'une carte SIM ne comprenant que le HNI de l'opérateur et, éventuellement, quelques digits identiques pour toutes les cartes gérées selon ce procédé. Le code bootstrap est celui qui peut être indiqué sans risque de sécurité à l'utilisateur.

La clé de transport K_{T} est pour cela ici utilisée. Cette clé de transport K_{T} aura préalablement été entrée dans la carte SIM vendue à l'utilisateur (inscrite en dur). D'une carte à l'autre, les clés de transport sont différentes, afin d'éviter que des utilisateurs indélicats (fraudeurs) n'entrent deux fois le même code secret s dans des cartes différentes (par exemple dans des cartes vierges qu'ils auraient pu se procurer illégalement). Pour l'utilisateur, la clé de transport K_{T} dont il n'a pas connaissance, correspondra par exemple à un numéro de série SER inscrit visiblement sur la carte ou sur son emballage. Au niveau de l'opérateur, chaque numéro de série SERᵢ correspond à une clé de transport K_{Ti} différente.

Au niveau de l'opérateur, la clé de transport K_{T} sert à chiffrer le secret s à l'aide d'un algorithme de chiffrement 60. L'algorithme de chiffrement, préférentiellement de type triple DES ou AES, génère un chiffré du secret s noté BC_{KT}[s].

Avantageusement, un code de redondance noté CS est généré à partir de BC_{KT}[s]. Ce code de redondance CS permettra ultérieurement de prévenir l'utilisateur final s'il commet une erreur en entrant le code bootstrap qui lui sera indiqué, comme il sera vu par la suite. L'algorithme de calcul du code de redondance est par exemple de type CRC16-CCITT.

Le chiffré BC_{KT}[s] et le CS optionnel sont ensuite concaténés pour fournir le code, dit code bootstrap 61 qui peut être indiqué à l'utilisateur final. Le code bootstrap 61 est préférentiellement en base 12.

La figure 7 représente un tableau obtenu à l'issue de la génération d'un code bootstrap. A chaque clé de transport KTᵢ est associé un numéro de série SERᵢ. Le numéro de série correspond donc à une clé de transport spécifique inscrite en dur dans la carte.

La suite du procédé est la suivante : lors de la souscription d'un abonnement auprès d'un opérateur par un utilisateur final, le revendeur remet au futur abonné une carte SIM contenant uniquement le HNI de cet opérateur, et, éventuellement les préfixes identiques d'IMSIs (les chiffres D₈ à D₄ mentionnés précédemment à titre d'exemple). L'acheteur d'une carte SIM contacte son futur opérateur ou un centre d'affectation d'IMSIs (CAI) associé à cet opérateur, par exemple par téléphone, et lui indique le numéro de série figurant sur sa carte. Comme chaque numéro de série correspond à une carte donnée, l'opérateur sait quelle clé de transport lui correspond. L'opérateur indique alors au futur abonné le code bootstrap BC_{KT}[s] correspondant à ce numéro de série, par exemple également par téléphone. A titre d'exemple, si le numéro de série indiqué par l'utilisateur final est SER₂, le code bootstrap BC_{KT2}[S_{BS2}] lui sera indiqué par l'opérateur. C'est effectivement à ce moment là que l'opérateur doit choisir une IMSI libre, en déduire le secret s correspondant et faire le chiffrement de s avec la clé de transport K_{T} qui est maintenant connue car elle correspond au numéro de série indiqué par l'utilisateur.

On génère donc chaque code bootstrap dynamiquement à la demande d'activation de sa carte par un utilisateur et les codes bootstrap n'ont donc pas besoin d'être mémorisés du coté de l'opérateur.

Dans un mode de mise en oeuvre préférentiel, le futur abonné, après avoir inséré sa carte SIM dans son téléphone portable, entre alors à l'aide du clavier de ce téléphone portable le code bootstrap qui lui a été donné par l'opérateur. Ce code bootstrap, référencé 61 sur la figure 8, est transmis à la carte SIM. Il est possible de coder le code bootstrap en base douze, de sorte que non seulement les chiffres 0 à 9 seront utilisables, mais également les caractères # et *. On exploite ainsi au maximum les possibilités des claviers existants et on raccourcit au mieux la longueur du code à entrer. Un code bootstrap sur 28 digits pourra ainsi par exemple s'écrire :
0123 - 4567 - 89#0 - 1234 - 5678 - 9*01 - 2345

Un tel code peut facilement être entré au clavier du téléphone par l'utilisateur, sans trop risque d'erreur, surtout s'il est fragmenté en plusieurs parties (7x4 digits).

La carte comporte un dispositif conforme à celui de la figure 8.

Le code bootstrap 61, après avoir été converti en représentation binaire, est déchiffré par un module 70 recevant par ailleurs la clé de transport K_{T} inscrite en dur dans la carte. Le module 70 fournit donc le secret s identique à celui des figures 5 et 6. Ce code secret est précisément celui qui a permis d'obtenir le suffixe de l'IMSI associé dans le tableau de la figure 4.

La carte applique alors au secret s la fonction de hachage 51 de la figure 5 recevant par ailleurs optionnellement la clé mère Kₘ également inscrite en dur dans la carte. La valeur h de la figure 5 est alors régénérée au niveau de la carte, celle-ci comportant d'une part le suffixe i qui est concaténé avec le préfixe (HNI + éventuellement les premier chiffres constants du MSIN) pour former l'IMSI de la carte et d'autre part la clé Kᵢ.

La clé Kᵢ est constituée par exemple par les bits de poids le plus faible de h mais peut également être obtenue par une partie seulement des bits restants.

Le couple IMSI/Ki aura donc été régénéré dans la carte SIM et l'abonné peut dès lors communiquer avec son téléphone portable.

Le couple IMSI/Ki régénéré peut dès lors, si l'opérateur le désire, être modifié par OTA, puisque l'opérateur peut désormais s'adresser à la carte SIM.

Si un code de redondance a été utilisé et concaténé à BC_{KT}[s], la carte recalcule CS et le compare avec le code CS reçu. S'ils diffèrent, le procédé s'arrête (le secret s est erroné). S'ils sont identiques, on déclenche le procédé décrit précédemment en référence à la figure 8.

Le procédé selon l'invention est particulièrement sécurisé dans la mesure où un attaquant qui voudrait pirater le système aurait besoin de la clé mère K_{M}, de la clé de transport K_{T} et d'un code bootstrap. Comme seul le code bootstrap est indiqué à un utilisateur final, l'attaquant devrait donc pirater le système de l'opérateur pour récupérer une clé de transport K_{T} et une clé mère Kₘ, ce qui est particulièrement ardu.

Il n'est pas non plus possible de dupliquer une carte obtenue selon cette méthode du fait de la diversification des clés de transport K_{T}.

L'invention permet ainsi à l'utilisateur de générer son code IMSI et une clé Ki associée. Il est à noter que la clé Ki peut être quelconque dans un système GSM, c'est-à-dire qu'elle n'a pas à respecter une structure préétablie, la seule contrainte étant que sa taille doit être de 128 bits.

L'opérateur se contente de fournir à ses revendeurs des cartes SIMs identiques qui ne contiennent que son HNI et une clé de transport. Eventuellement, chaque carte comporte également une clé mère Km (pour des secrets s générés courts, la clé mère Km n'étant pas nécessaire si les secrets s sont suffisamment longs, ce qui nécessitera pour l'utilisateur d'entrer un code long dans la carte SIM via le clavier). La seule distinction entre deux cartes SIMs d'un même opérateur est donc le numéro de série qui peut être le numéro de téléphone attribué à cette carte SIM, ainsi que la clé de transport associée. L'opérateur, à partir de ce numéro de série, indique à l'utilisateur final le code bootstrap qui permet à la carte de régénérer un couple IMSI/Ki valide.

La génération des secrets s est rapide : le calcul d'un nombre n de secrets s correspondant à une liste de n IMSI valides est en moyenne égal à n*(n+1)/2. Pour un ordinateur Pentium 4 fonctionnant à 3 GHz, environ 940.000 hachages SHA-1 (bloc 51 de la figure 5) peuvent être calculés par seconde. En tenant compte du nombre de collisions pour lesquels un secret s génère un IMSI déjà calculé, 10.000 codes bootstraps sont générés en 53 secondes, 100.000 bootstraps sont générés en 1 h30 et 1 million de bootstraps sont générés en 6 jours, sans parallélisation des calculs.

L'invention s'applique non seulement à des cartes SIMs mais également à tout système de téléphonie mobile comme le CDMAOne, le PDC japonais ou le CDMA2000 qui supportent optionnellement une telle carte. Elle s'applique également à des objets communicants ne comportant pas de cartes amovibles. Dans ce cas, les données mentionnées dans cette description sont entrées directement dans l'appareil, par exemple un PDA.

## Revendications

1. Procédé de génération d'une première (IMSI) et d'une deuxième (KI) données dans un objet portable communiquant (SIM), lesdites premières données (IMSI) étant différentes les unes des autres, ledit procédé étant précédé d'une étape préalable de régénération d'une série prédéterminée (IMSI BSi) desdites premières données (IMSI) associés à ces deuxièmes données (Ki), ladite étape préalable consistant à :
i générer une valeur secrète (s) ;
ii générer une suite de caractères à l'aide d'une fonction non inversible (H) ayant en entrée ladite valeur secrète (s) ;
iii vérifier si une partie prédéterminée des caractères de ladite suite correspond à une desdites premières données et :
- si oui, mémoriser ladite première donnée, ladite valeur secrète (s) ayant permis de générer ladite suite et également tout ou partie des caractères restants de ladite suite, cette dernière partie constituant la deuxième donnée (Ki) associée à ladite partie prédéterminée de caractères ;
- si non, reprendre ledit procédé au point i ;
iv reprendre ladite étape préalable au point i jusqu'à ce qu'à chacune desdites premières données soit associée une deuxième donnée (Ki) et une valeur secrète (s) ayant permis de l'obtenir,
ledit procédé de génération consistant à :
a entrer dans ledit objet portable communiquant (SIM) une desdites valeurs générées (s) durant ladite étape préalable ;
b générer dans ledit objet portable communiquant (SIM) ladite première donnée (IMSI) et la deuxième donnée correspondante (Ki) en appliquant ladite fonction non inversible (H) à ladite valeur secrète (s).

2. Procédé selon la revendication 1, **caractérisé en ce que** ladite première donné est un identifiant (IMSI) dudit objet portable communiquant et **en ce que** ladite deuxième donnée est une clé de codage (Ki) associée à cet identifiant (IMSI).

3. Procédé selon l'une des revendications 1 et 2, **caractérisé en ce que** ladite valeur secrète (s) générée au point i est une valeur aléatoire.

4. Procédé selon l'une des revendications 1 à 3, **caractérisé en ce qu'**à l'étape a, ladite valeur secrète générée (s) durant ladite étape préalable est chiffrée par une clé de transport (K_{T}), son déchiffrement étant réalisé dans ledit objet portable communiquant (SIM).

5. Procédé selon la revendication 4, **caractérisé en ce que** ladite clé de transport (K_{T}) correspond à un numéro de série dudit objet portable communiquant.

6. Procédé selon l'une des revendications 1 à 5, **caractérisé en ce que** ledit objet portable communiquant est une carte de circuit intégré universel (UICC).

7. Procédé selon l'une des revendications 1 à 6, **caractérisé en ce que** ladite fonction non inversible (H) est une fonction de hachage.

8. Procédé selon l'une des revendications 1 à 7, **caractérisé en ce qu'**une clé mère (Km) est également appliquée à ladite fonction non inversible (H) à l'étape ii et lors de la mise en oeuvre dudit procédé de génération embarquée (étapes a et b).

9. Objet portable communiquant comprenant des moyens pour mettre en oeuvre l'étape b selon la revendication 1.
